# EUROPEAN PATENT APPLICATION

(11) **EP 1 879 065 A1**
(43) Date of publication of application: **16.01.2008**
(21) Application number: 07012430.0
(22) Date of filing: 26.06.2007
(51) Int. Cl.: G02F 1/13, G02F 1/13357

(54) **Light weight liquid crystal display**

(30) Priority: 14.07.2006 KR 20060066378
(71) Applicant: Samsung Electronics Co., Ltd., Yeongtong-gu Suwon-city, Gyeonggi-do 442-742 (KR)
(72) Inventor: Jung, Dae-Yoon, Yongin-si, Gyeonggi-do (KR)
(74) Representative: Dr. Weitzel & Partner

(57) **Abstract**

A liquid crystal display includes an upper cover comprising a display window, a liquid crystal panel provided behind the upper cover, a light guide plate provided behind the liquid crystal panel, a light source unit provided along a side of the light guide plate, and a light source cover which comprises a reflection unit that is joined to the upper cover and reflects light emitted from the light source unit to the light guide, and a support unit that extends from a side of the reflection unit to a rear of the light guide plate.

## Description

### BACKGROUND OF THE INVENTION

### Technical Field

The present invention relates to a liquid crystal display, and more particularly, to a lightweight thin film liquid crystal display.

### Discussion of the Related Art

Liquid crystal displays are a form of video display device that can display a video signal using a matrix of liquid crystal cells. A light transmittance ratio of each liquid crystal cell may be adjusted to control the amount of light that can pass through each cell. By using light emitted from a backlight unit, the video signal may thereby be represented on the display.

The liquid crystal display includes a liquid crystal panel. An optical sheet is provided behind the liquid crystal panel. A mold frame separates the optical sheet from the liquid crystal panel and provides structural support for the optical sheet. A light guide plate is provided behind the optical sheet. A light source is provided at a side part of the light guide unit. A reflection sheet is provided behind the light guide plate. An upper cover and a lower cover accommodate each of the above elements therebetween.

### SUMMARY OF THE INVENTION

Exemplary embodiments of the present invention provide a lightweight thin film liquid crystal display having a low manufacturing cost. A liquid crystal display according to an exemplary embodiment of the present invention includes an upper cover including a display window. A liquid crystal panel is provided behind the upper cover. A light guide plate is provided behind the liquid crystal panel. A light source unit is provided along a side part of the light guide plate. A light source cover includes a reflection unit that is joined to the upper cover and reflects light emitted from the light source unit to the light guide. A support unit extends from a side part of the reflection unit to a rear of the light guide plate.

According to an aspect of the invention, the support unit is partially superposed on the light guide plate.

According to an aspect of the invention, the light source cover further includes a wall unit which extends upwards from opposite sides of the support unit. The wall unit is horizontally provided with respect to the reflection unit.

According to an aspect of the invention, the light source unit includes a pair of light source units provided on opposite sides of the light guide plate. The light source cover includes a pair of light source covers which are respectively provided corresponding to the pair of light source units.

According to an aspect of the invention, the light guide plate is accommodated into an accommodation space formed by the wall unit and the support unit.

According to an aspect of the invention, the upper cover is joined to the wall unit.

According to an aspect of the invention, the light source cover has a thickness within the range of about 1mm to about 3mm.

According to an aspect of the invention, the light source cover includes a plastic material.

According to an aspect of the invention, the liquid crystal display further includes a drive unit which includes a flexible printed circuit board and a drive chip mounted onto the flexible printed circuit board. The flexible printed circuit board extends to a rear of the support unit and faces the support unit.

According to an aspect of the invention, a mirror ink layer is formed by applying a mirror ink to a rear of the light guide plate.

According to an aspect of the invention, the liquid crystal display further includes a reflection plate provided between the light guide plate and the support unit.

According to an aspect of the invention, the liquid crystal display further includes a light leak blocking member provided between the reflection plate and the support unit.

According to an aspect of the invention, the light leak blocking member includes aluminum.

According to an aspect of the invention, the light leak blocking member includes a plate shape and is supported by the support unit.

According to an aspect of the invention, the light leak blocking member is formed by coating a rear of the reflection plate.

According to an aspect of the invention, the light leak blocking member has a thin film shape and is attached on a rear of the reflection plate by a taping process.

According to an aspect of the invention, the reflection place envelops a part of the light source unit.

According to an aspect of the invention, the liquid crystal display further includes an optical sheet provided between the light guide plate and the liquid crystal panel. A mold frame separates the liquid crystal panel from the optical sheet and supports the liquid crystal panel.

According to an aspect of the invention, the mold frame is supported by the reflection unit.

According to an aspect of the invention, the upper cover is joined to the wall unit through the mold frame.

Exemplary embodiments of the present invention include providing a liquid crystal display including a liquid crystal panel. A drive unit is joined to a part of the liquid crystal panel. A light guide plate is provided behind the liquid crystal panel. A light source unit is provided along a side part of the light guide plate. A light source cover includes a reflecting unit which reflects a light emitted from the light source unit to the light guide plate. The light source cover further includes a support unit which extends from a part of the reflection unit to a rear of the light guide plate. The drive unit extends to a part of the support unit and faces the support unit.

### BRIEF DESCRIPTION OF THE DRAWINGS

The above and/or other aspects of the present disclosure will become apparent and more readily appreciated from the following description of the exemplary embodiments, taken in conjunction with the accompanying drawings of which:
FIG. 1 is an exploded perspective view illustrating a liquid crystal display according to an exemplary embodiment of the present invention;
FIG. 2 is a sectional view taken along II-II of FIG. 1;
FIG. 3 is a sectional view taken along III-III of FIG. 1;
FIG. 4 is a perspective view illustrating a light source cover according to an exemplary embodiment of the present invention;
FIG. 5 is a perspective view illustrating a liquid crystal display according to an exemplary embodiment of the present invention;
FIG. 6 is a perspective view illustrating a liquid crystal display according to an exemplary embodiment of the present invention; and
FIG. 7 is a perspective view illustrating a liquid crystal display according to an exemplary embodiment of the present invention.

### DETAILED DESCRIPTION OF THE EXEMPLARY EMBODIMENTS

Reference will now be made to exemplary embodiments of the present invention, examples of which are illustrated in the accompanying drawings, wherein like reference numerals may refer to like elements throughout.

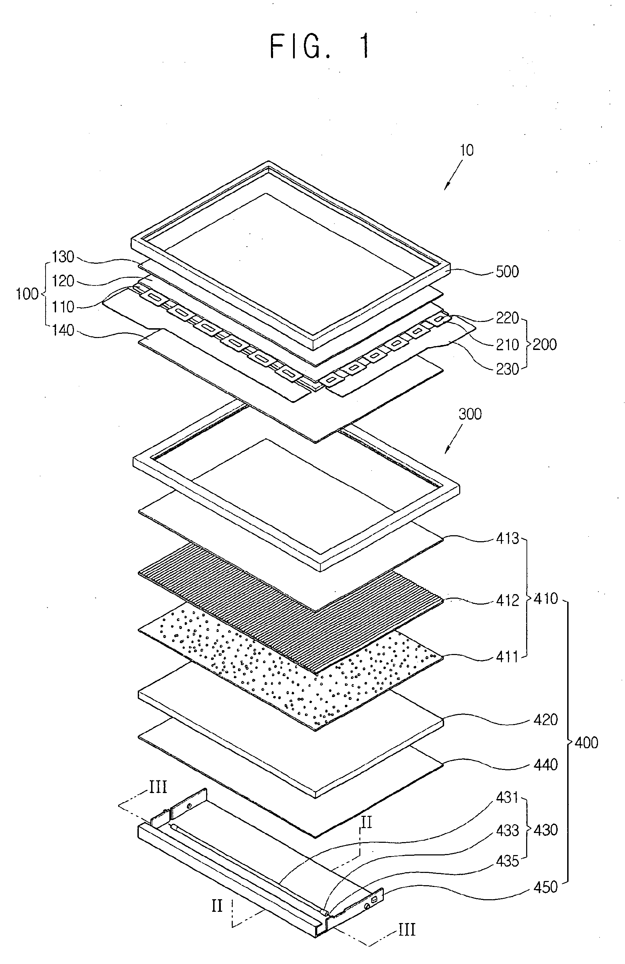

As illustrated in FIG. 1, a liquid crystal display 10 according to an exemplary embodiment of the present invention includes a liquid crystal panel 100 that generates a video. A drive unit 200 drives the liquid crystal panel 100. A mold frame 300 supports a side part of the liquid crystal panel 100. A backlight unit 400 emits a light toward a rear of the liquid crystal panel 100. An upper cover 500 covers the side part of the of the liquid crystal panel 100.

The liquid crystal panel 100 includes a thin film transistor (TFT) substrate 110. A color filter substrate 120 faces the TFT substrate 110. A liquid crystal layer (not shown) is provided between the color filter substrate 120 and the TFT substrate 110. The liquid crystal panel 100 further includes polarization sheets 130 and 140 provided in front of and behind the TFT substrate 110 respectively. The polarization sheets 130 and 140 allow light passing through the liquid crystal panel 100 to be polarized. Here, the polarization sheets 130 and 140 may include a front polarization sheet 130 provided in front of the TFT substrate 110 and a rear polarization sheet 140 provided behind the TFT substrate 110. The liquid crystal panel 100 includes liquid crystal cells aligned in a matrix as pixels. With this configuration, video is generated by adjusting the light transmittance ratio of the liquid crystal cells according to video signal information transmitted from the drive unit 200.

The TFT substrate 110 includes a plurality of gate lines and a plurality of data lines formed in a matrix thereon. A signal voltage transmitted from the drive unit 200 is supplied between the pixel electrode and a common electrode of the color filter substrate 120 as described below. Here, a liquid crystal layer between the pixel electrode and the common electrode is aligned according to the signal voltage and the light transmittance ratio is set.

The color filter substrate 120 includes a color filter and the common electrode. Here, the color filter includes red, green, and blue color matrixes or cyan, magenta, and yellow matrixes formed thereon. The common electrode includes a transparent conductive material such as indium tin oxide (ITO) and/or indium zinc oxide (IZO). Further, the color filter substrate 120 has an area smaller than an area of the TFT substrate 110.

The front polarization sheet 130 and the rear polarization sheet 140 intersect each other so that the light passing into the liquid crystal panel 100 can be polarized and pass out of the liquid crystal panel 100. The rear polarization sheet 140 polarizes the light passing into the liquid crystal panel 100. The front polarization sheet 130 is provided as an analyzer.

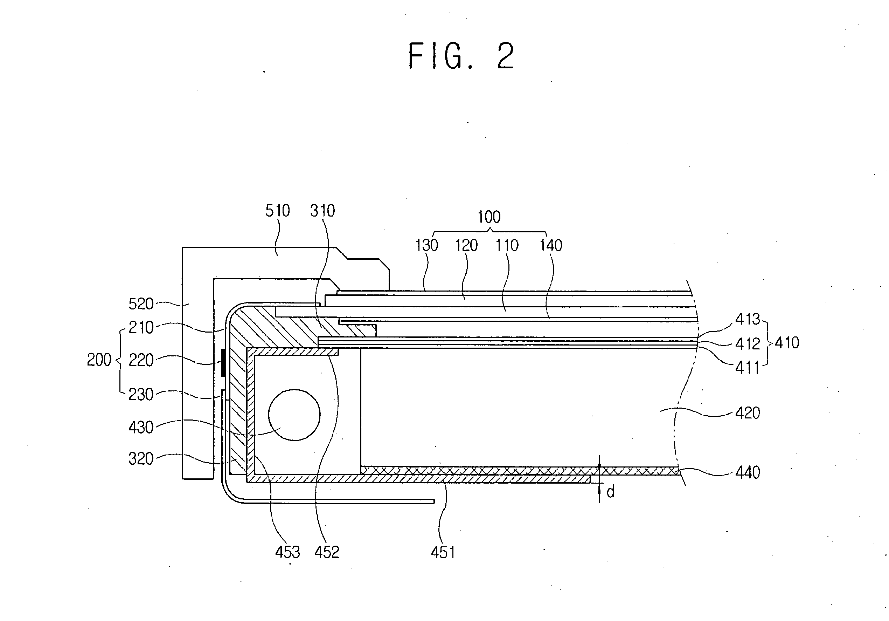

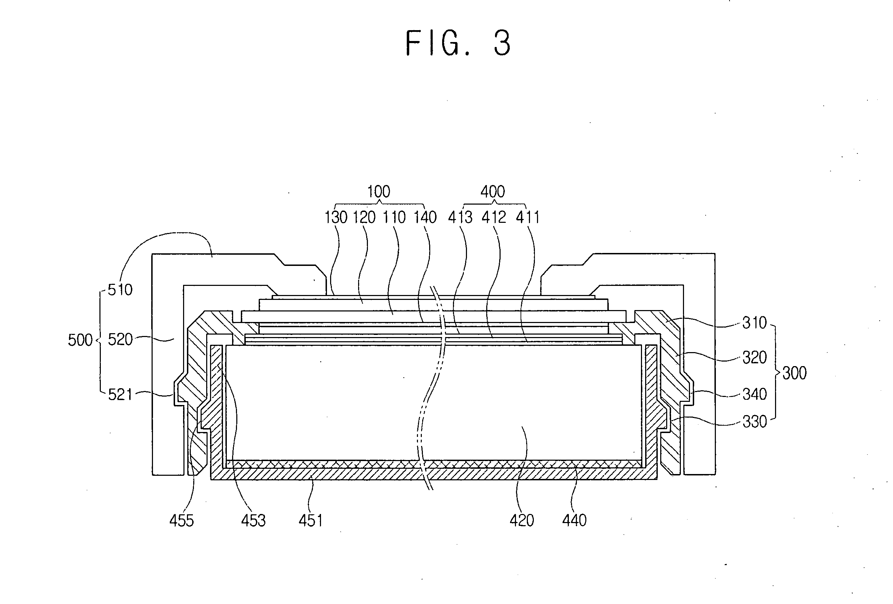

The drive unit 200 is provided in a part of the TFT substrate 110. The drive unit 200 includes a flexible printed circuit board (FPCB) 210, a drive chip 220 mounted onto the FPCB 210, and a printed circuit board (PCB) 230 connected to a part of the FPCB 210. As illustrated in FIG. 2 and 3, the drive unit 200 extends to a rear of a support unit 451 of a light source cover 450 as described below and faces the support unit 451.

The drive chip 220 may be mounted onto the FPCB 210 according to a Chip on Film (COP) method. Alternatively, the drive chip 220 may be mounted onto the FPCB 210 according to other known methods, for example, a Tape Carrier Package (TCP) method and a Chip on Glass (COP) method. Further, the drive unit 200 may be formed on the TFT substrate 110 during a process of forming the gate lines or data lines. The drive unit 200 includes a connection port allowing the drive unit to be electrically connected to other elements. The connection port of the drive unit 200 is mounted on the TFT substrate 110. The connection port is connected to an end part of the gate lines and the data lines. The gate lines and data lines are provided on the TFT substrate 110 extending from a display region to a non-display region.

The mold frame 300 has an approximately square shape and is formed along the side part of the liquid crystal panel 100. The mold frame 300 separates the liquid crystal panel 100 from the backlight unit 400 and supports the liquid crystal panel 100. As illustrated in FIGS. 2 and 3, the mold frame 300 according to an exemplary embodiment of the present invention includes a frame 310, a mold sidewall 320 bent downward from the frame 310, a mold joint groove 330 having a predetermined depth depressed in an inside part of the mold sidewall 320, and a mold joint protrusion 340 protruding from an outside part of the mold sidewall 320 toward an outer side thereof. The frame 310 has an approximately square shape. A part of the frame 310 is supported by an upper part of a reflection unit 452 of the light source cover 450 as described below. A support area supporting the side part of the liquid crystal panel 100 is provided on an upper part of the frame 310. The mold joint groove 330 is joined to a light source cover protrusion unit 455 as described below. The mold joint groove 330 is provided in the inside part of the mold sidewall 320. The mold joint protrusion 340 is joined to an upper cover joint groove 521 as described below. The mold joint protrusion 340 is provided in the outside part of the mold sidewall 320. The mold joint groove 330 and the mold joint protrusion 340 are provided in the mold sidewall 320 facing a wall unit 453 of the light source cover 450 as described below.

The backlight unit 400 includes an optical sheet 410 provided in the rear of the liquid crystal panel 100. A light guide plate 420 uniformly supplies light emitted from a light source unit 430 to a rear of the liquid crystal panel 100. The light source unit 430 is provided in a part of the light guide plate 420. A reflection plate 440 is provided behind the light guide plate 420. The light source cover 450 reflects the light emitted from the light source unit 430 to the light guide plate 420.

The optical sheet 410 may include a diffusion sheet 411, a prism sheet 412, and a protection sheet 413 on the rear side of the liquid crystal panel 100. Here, the diffusion sheet 411 includes a base plate and a coated layer having a bead shape formed on the base plate. The diffusion sheet 411 diffuses the light emitted from the light source unit 430 and supplies the diffused light to the liquid crystal panel 100. Two or three stacked diffusion sheets 411 may be used.

The backlight unit 400 may be, for example, an edge type backlight unit or a direct type backlight unit. Since the direct type backlight unit does not require the light guide plate 420 (unlike the edge type backlight unit) and is not supported by the light guide plate 420, the diffusion sheet 411 may be relatively thick to increase its mechanical strength. Triangular prisms are formed in a regular arrangement on an upper part of the prism sheet 412. The prism sheet 412 gathers the light diffused through the diffusion sheet 411 in a direction perpendicular to the planar surface of the liquid crystal panel 100. For example, two prism sheets may be provided and a micro prism having a predetermined angle may be formed on the respective prism sheet 412. Light passing through the prism sheet 412 advances primarily in the direction perpendicular to the planar surface of the liquid crystal panel 100. Accordingly, the light passing through the prism sheet 412 can provide a uniform distribution of luminance. The protection sheet 413, which is provided in an uppermost part and/or in another part of the backlight unit 400, may perform various functions such as a protection of the prism sheet 412 which may otherwise be easily scratched.

The light guide plate 420, which is provided along a side part of the light source unit 430 and in rear of the liquid crystal 100, guides the light emitted from the light source unit 430 to a rear of the liquid crystal panel 100. The light guide plate 420 includes an incident surface to receive the light emitted from the light source unit 430, an exit surface to extend from the incident surface and to face the liquid crystal panel 100, and a rear surface having a predetermined pattern formed thereon allowing a light passing into the incident surface to go to the exit surface. Here, the rear surface faces the reflection plate 440. Accordingly, the light guide unit 420 can convert the light supplied from the light source unit 430 provided close to the incident surface to the incident surface into planar light and evenly transmit the converted planar light to the liquid crystal panel 100. The light guide plate 420 may have a rectangular shape with a longer side and a shorter side. Alternatively, the light guide unit 420 may have a wedge shape (not shown) having a thickness that tapers from one end part of the light guide plate 420 toward the other end part thereof.

The light source unit 430 includes a light source main body 431 to emit light, a pair of light source electrodes 433 provided in opposite parts of the light source main body 431, respectively, and a light source line 435 connected to each of the pair of opposite light source electrodes 433. An inverter (not shown) supplies power to the light source unit 430 through the light source line 435. The supplied power is used to drive the light source unit 430. For example, the light source electrodes 433 and the light source line 435 are connected to each other by soldering. The light source unit 430 may be provided along the longer side of the light guide plate 420 as discussed below. Further, the light source main body 431 of the light source unit 430 may employ a cold cathode fluorescent lamp (CCFL). Alternatively, the light source main body 431 may employ an external electrode fluorescent lamp (EEFL) having a high luminance, a low cost, and a low power consumption capable of driving the light source unit 430 with one inverter (not shown). In addition, the light source main body 431 may employ a light-emitting diode (LED) having a high luminance and an improved color reproduction.

The reflection plate 440 reflects and supplies the light emitted from the light source unit 430 to the diffusion sheet 411. The reflection plate 440 may include a material such as polyethylenterephthalate (PET) and polycarbonate (PC).

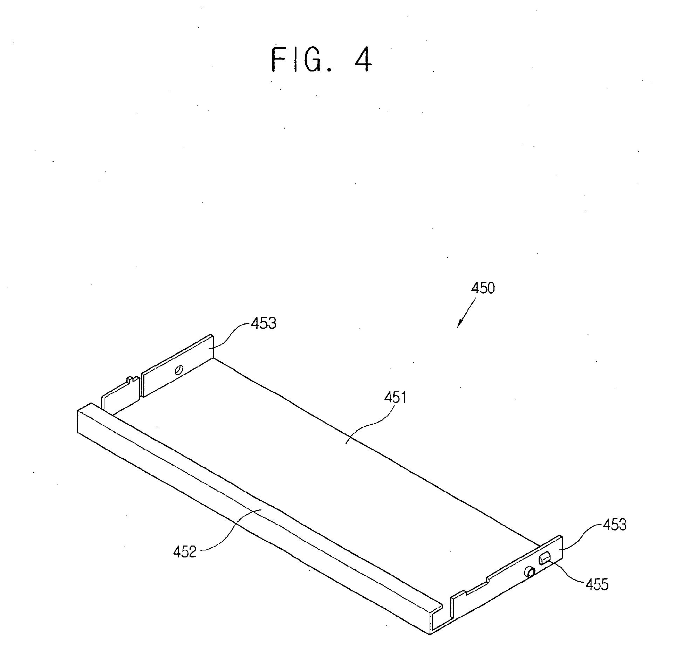

The light source cover 450 is provided in the rear of the reflection plate 440 and reflects the light emitted from the light source unit 430 to the incident surface of the light guide plate 420. As illustrated in FIGS. 2 through 4, the light source unit 450, according to an exemplary embodiment of the present invention, includes the support unit 451 partially superposed on the light guide plate 420 at the rear part of the reflection plate 440. The reflection unit 452 extends from a part of the support unit 451 and surrounds a part of the light source unit 430. The wall unit 453 upwardly extends from the part of the support unit 451.

The support unit 451 has a rectangular plate shape having a longer side and a shorter side. In particular, as illustrated in FIGS. 2 and 3, the longer side of the support unit 451 has a size corresponding to the longer side of the light guide plate 420. The shorter side of the support unit 451 has a size smaller than the shorter side of the light guide plate 420. The support unit 451 has a predetermined size partially superposed on the light guide plate 420 and/or the reflection plate 440.

The reflection unit 452 extends from one of two longer sides of the support unit 451 and is upwardly bent. The reflection unit 452 surrounds a part of the light source unit 430. The reflection unit 452 reflects the light emitted from the light source unit 430 to the incident surface of the light guide plate 420. A reflection material is coated on a surface of the reflection unit 452 facing the light source unit 430. Though not shown, a plurality of protrusions or prisms may be provided on an inside part of the light source unit 430 to improve the uniformity of a light reflected from the reflection unit 430. The mold frame 300 is supported by an upper part of the reflection unit 430.

The wall unit 453 extends from the opposite shorter sides of the support unit 451, respectively. In particular, the opposite shorter sides of the support unit 451 face each other and are horizontally provided with respect to the reflection unit 452. The wall unit 453 includes the light source cover protrusion part 455 to protrude to an outer side thereof. The light source cover protrusion part 455 is jointed to the mold joint groove 330 of the mold sidewall 320.

The light source cover 450 may be made of a plastic material. Further, the light source cover 450 has a predetermined thickness "d" as shown in FIG. 2. For example, the predetermined thickness d may be within the range of appropriately 1mm through approximately 3mm. The light guide plate 420 and the reflection plate 440 are accommodated into an accommodation space formed by the support unit 451 and the wall unit 453. The mold frame 300 is joined to the light source cover 450. Accordingly, the optical sheet 410, the light guide plate 420, the light source unit 430, and the reflection plate 440 can be supported between the mold frame 300 and the light source cover 450.

The upper cover 500 includes a front unit 510 forming a display window allowing an effective surface of the liquid crystal panel 100 to be externally displayed. A cover side unit 520 bends downward from the front unit 520. The upper cover 500 is joined to the mold frame 300 and accommodates and supports the liquid crystal panel 100, the drive unit 200, the mold frame 300, and the light source cover. As illustrated in FIG. 3, the upper cover joint groove 521 is depressed in an outer side direction and is provided on an inside part of the cover side unit 520. The upper cover joint groove 521 is joined to the mold joint protrusion 340.

In the liquid crystal display 10 having the above-described configuration, a lower cover including a metal material need not be provided. Instead, the light source cover 450 extends and supports the light guide plate 420 and the reflection plate 440. Further, the light source cover 450 having a predetermined thickness is strongly joined to the upper cover 500 through the mold frame 300 thereby resisting a bending load. Thus, according to the exemplary embodiment, the liquid crystal display may have a strong and simple configuration, an efficient assembly, and a relatively low manufacturing cost. Also, according to the exemplary embodiment, the liquid crystal display may have a relatively light weight, a relatively small thickness, and a relatively small width (size).

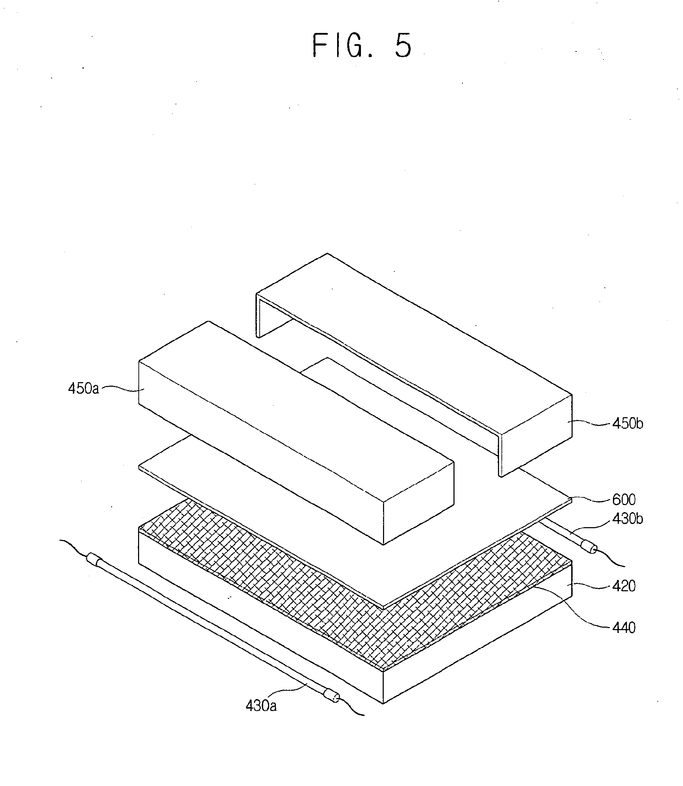

Additional exemplary embodiments of the present invention will be described with reference to FIGS. 5 through 7. These exemplary embodiments may share one or more of the features of the exemplary embodiments discussed above. For example, elements of FIGS. 5 through 7 having the same reference numerals as elements of FIGS. 1 through 4 may represent the same or similar features.

FIG. 5 is a perspective view illustrating a liquid crystal display 10 according to an exemplary embodiment of the present invention. As illustrated, a plurality of light source units 430a and 430b (for example, two light source units) are provided in opposite side parts of a light guide plate 420. A plurality of light source covers 450a and 450b (for example, two light source covers) face each other and correspond to the light source units 430a and 430b. Here, a first light source cover 450a may be separated from a second light source cover 450b. Accordingly, when the first light source cover 450a is separated from the second light source cover 450b, an assembling process for the light source units 430a and 430b, the light guide plate 420, and a reflection plate 440 into the light source covers 450a and 450b may be easily performed.

A light leak blocking member 600 is provided between the reflection plate 440 and the light source covers 450a and 450b, which are provided in rear of the light guide plate 420. Since the light source covers 450a and 450b according to exemplary embodiments of the present invention may not cover a whole rear part of the light guide plate 420, light may leak from the rear of the light guide plate 420. Accordingly, the light leak blocking member 600 has a plate shape with a predetermined thickness. The light leak blocking member 600 minimizes the leakage of light and enhances the efficiency of light transmittance. Blocked light is reflected on the reflection plate 440 to reflect light to the rear of the light guide plate 420. The light leak blocking member 600 may include a material comprising aluminum. The light source covers 450a and 450b support the light leak blocking member 600.

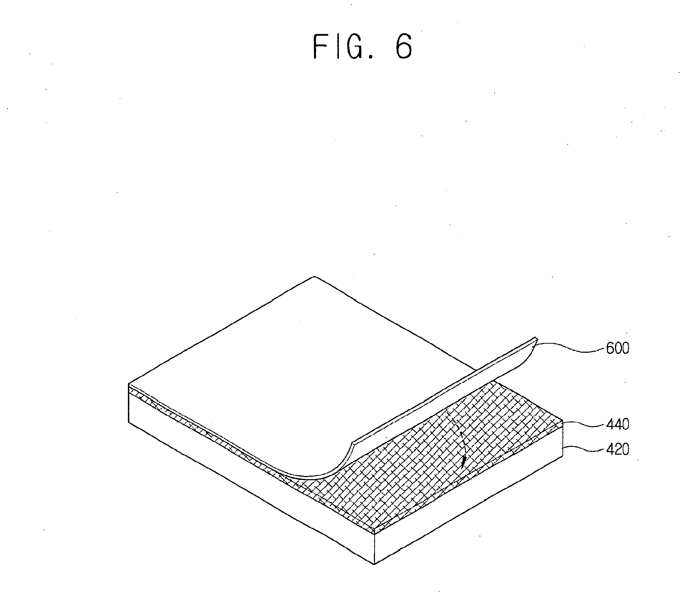

FIG. 6 is a perspective view illustrating a light leak blocking member 600 of a liquid crystal display 10 according to an exemplary embodiment of the present invention. As illustrated, the light leak blocking member 600 has a thin film shape instead of the plate shape of the light leak blocking member described above. The light leak blocking member 600 is attached to a rear of a reflection plate 440 by a taping process. In the taping process, a thin film light leak blocking member 600 including aluminum is provided on a polymer film or sheet, for example, a PET film or sheet. The light leak blocking member 600 is attached to the rear of the reflection plate 440 by mechanical force. Then, the polymer film or sheet is separated from the rear of the reflection plate 440. Alternatively, the light leak blocking member 600 may be formed by coating the rear of the reflection plate 440 with aluminum, or by depositing evaporated aluminum on the rear of the reflection plate 440.

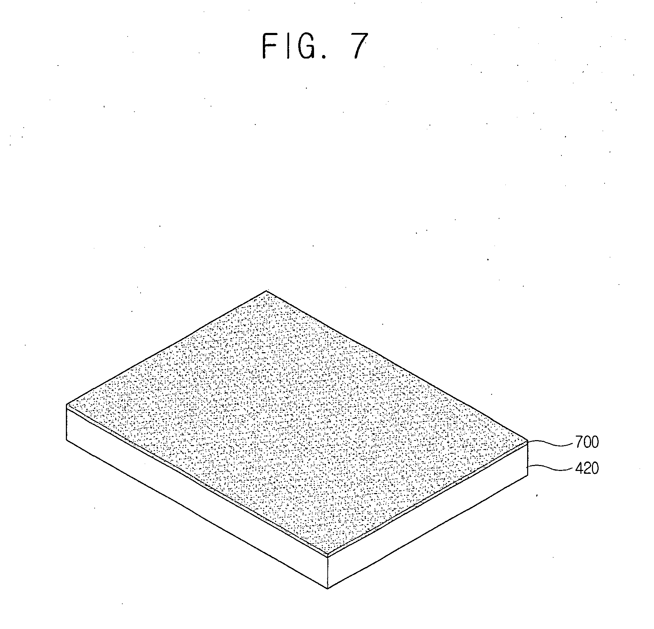

FIG. 7 is a perspective view illustrating a mirror ink layer of a liquid crystal display 10 according to an exemplary embodiment of the present invention. A mirror ink layer 700 is formed by applying mirror ink to a rear of a light guide plate 420. The mirror ink is a functional ink that functions as a mirror and reflects light and prevents light from being leaked. Accordingly, the liquid crystal display 10 according to the exemplary embodiment of the present invention does not need to employ a reflection plate 440. The mirror ink layer 700, which is formed on the rear of a light guide plate 420, may include acryl, polyvinyl chloride (PVC), PC or the like. The mirror ink is applied to the rear of the light guide plate 420 until the mirror ink layer 700 of the mirror ink is of a sufficient thickness to function as a mirror. Then, the formed mirror ink layer 700 may be dried in an ambient condition. Alternatively, the formed mirror ink layer 700 may be dried in a heated condition in a temperature from about 50 °C to 60°C for a period of about ten minutes.

Although exemplary embodiments of the present invention have been shown and described, it will be appreciated by those skilled in the art that changes may be made to these exemplary embodiments without departing from the principles and spirit of the invention.

## Claims

1. A liquid crystal display, comprising:
an upper cover comprising a display window;
a liquid crystal panel provided behind the upper cover;
a light guide plate provided behind the liquid crystal panel;
a light source unit provided along a side of the light guide plate; and
a light source cover which comprises a reflection unit that is joined to the upper cover and reflects light emitted from the light source unit to the light guide, and a support unit that extends from a side of the reflection unit to a rear of the light guide plate.

2. The liquid crystal display according to claim 1, wherein the support unit is partially superposed on the light guide plate.

3. The liquid crystal display according to claim 2, wherein the light source cover further comprises a wall unit which upwardly extends from opposite sides of the support unit, and
the wall unit is horizontally provided with respect to the reflection unit.

4. The liquid crystal display according to claim 3,
wherein the light source unit is provided on opposite sides of the light guide plate, respectively, and
the light source cover comprises a pair of light source covers which are respectively provided corresponding to the light source unit on opposite sides of the light guide plate.

5. The liquid crystal display according to claim 3, wherein the light guide plate is accommodated in an accommodation space formed by the wall unit and the support unit.

6. The liquid crystal display according to claim 5, wherein the upper cover is joined to the wall unit.

7. The liquid crystal display according to claim 6, wherein the light source cover comprises a thickness of about 1mm through about 3mm.

8. The liquid crystal display according to claim 6, wherein the light source cover comprises a plastic material.

9. The liquid crystal display according to claim 6, further comprising a drive unit which comprises a flexible printed circuit board and a drive chip mounted on the flexible printed circuit board,
wherein the flexible printed circuit board extends to a rear of the support unit and faces the support unit.

10. The liquid crystal display according to claim 9, wherein a mirror ink layer is formed by applying a mirror ink to a rear of the light guide plate.

11. The liquid crystal display according to claim 9, further comprising a reflection plate provided between the light guide plate and the support unit.

12. The liquid crystal display according to claim 11, further comprising a light leak blocking member provided between the reflection plate and the support unit.

13. The liquid crystal display according to claim 12, wherein the light leak blocking member comprises aluminum.

14. The liquid crystal display according to claim 13, wherein the light leak blocking member comprises a plate shape and is supported by the support unit.

15. The liquid crystal display according to claim 11, further comprising a light leak blocking member coated on a surface of the reflection plate, the surface of the reflection plate faces the support unit.

16. The liquid crystal display according to claim 13, wherein the light leak blocking member comprises a thin film shape and is attached on a rear of the reflection plate by a taping process.

17. The liquid crystal display according to claim 13, wherein the reflection place surrounds a part of the light source unit.

18. The liquid crystal display according to claim 17, further comprising an optical sheet provided between the light guide plate and the liquid crystal panel, and a mold frame which separates the liquid crystal panel from the optical sheet and supports the liquid crystal panel.

19. The liquid crystal display according to claim 18, wherein the mold frame is supported by the reflection unit.

20. The liquid crystal display according to claim 18, wherein the upper cover is joined to the wall unit through the mold frame.

21. A liquid crystal display, comprising:
a liquid crystal panel;
a drive unit joined to a part of the liquid crystal panel;
a light guide plate provided behind the liquid crystal panel;
a light source unit provided along a side of the light guide plate; and
a light source cover comprising a reflecting unit which is configured to reflect light emitted from the light source unit to the light guide plate,
the light source cover further comprising a support unit which extends from a part of the reflection unit to a rear of the light guide plate, and the drive unit which extends to a part of the support unit and faces the support unit.
